# EUROPÄISCHE PATENTANMELDUNG

(11) **EP 1 524 824 A1**
(43) Veröffentlichungstag der Anmeldung: **20.04.2005**
(21) Anmeldenummer: 04104985.9
(22) Anmeldetag: 12.10.2004
(51) Int. Cl.: H04M 1/22

(54) **Adaptive Beleuchtung bei Mobiltelefonen**

(30) Priorität: 14.10.2003 DE 10347753
(71) Anmelder: SIEMENS AKTIENGESELLSCHAFT, 80333 München (DE)
(72) Erfinder: Lagally, Michael, 81243 München (DE); Pätzold, Jens, 81827 München (DE)

(57) **Zusammenfassung**

Die Erfindung betrifft ein Kommunikationsendgerät mit Tastenund / oder Display-Beleuchtung, bei dem erfindungsgemäß die Beleuchtungsdauer adaptiv an die Wiederholfrequenz von Tastendrücken und / oder an momentane Aktivitäten ausgebildet ist.

## Beschreibung

Die Erfindung betrifft ein Kommunikationsendgerät gemäss dem Oberbegriff des Patentanspruchs.

Bei aktuellen Mobilfunkgeräten schaltet sich die Hintergrundbeleuchtung durch einen Tastendruck ein und nach einer fest voreingestellten Zeitspanne wieder aus. Das führt dazu, dass die Beleuchtung öfters zu früh ausgeht und der Benutzer, zum Beispiel bei einer Denkpause beim Schreiben einer SMS (Short Message), durch Drücken einer Taste die Beleuchtung explizit wieder einschalten muss. Oftmals wird eigentlich nutzlos ein Tastendruck ausgeführt, nur um die Beleuchtung im eingeschalteten Zustand zu belassen.

Der Erfindung liegt die Aufgabe zugrunde, die Beleuchtung für den Benutzer komfortabler auszugestalten.

Diese Aufgabe wird erfindungsgemäß durch die im Patentanspruch angegebenen Merkmale gelöst.

Das erfindungsgemäß Verfahren passt sich an das Benutzerverhalten an, so dass in Abhängigkeit von der Wiederholfrequenz von Tastendrücken oder in Abhängigkeit von der momentan ausgeführten Aktion das Licht mit einer angepassten Zeitdauer eingeschaltet wird.

Im Folgenden wird die Erfindung an Hand eines Ausführungsbeispieles beschrieben.

Die erfindungsgemäße Lösung liegt in der Adaption des Zeitverhaltens der Beleuchtungsregelung an das Benutzerverhalten:

Hierzu sind verschiedene Strategien möglich:
- Falls der Benutzer innerhalb eines Zeitraums häufig Tasten drückt, wird das Beleuchtungsintervall sukzessive bis zu einem Maximal-Wert verlängert.
- Falls der Benutzer unmittelbar nach dem Verlöschen der Beleuchtung eine Taste drückt, wird das Beleuchtungsintervall ebenfalls verlängert.
- Beim Einleiten bestimmter Aktivitäten, die normalerweise eine längere Texteingabe bedeuten, zum Beispiel bei Beginn des Schreibens einer SMS, wird das Beleuchtungsintervall prophylaktisch erhöht. Desgleichen wird beim Scrollen beziehungsweise beim Durchsuchen eines Menüs oder von Internetseiten das Beleuchtungsintervall prophylaktisch erhöht.
- Beim Beenden dieser Aktivitäten, zum Beispiel nach dem Absenden der SMS, wird das Beleuchtungsintervall wieder auf den ursprünglichen Wert zurückgesetzt.

## Patentansprüche

1. Kommunikationsendgerät mit Tasten- und / oder Display-Beleuchtung,
**dadurch gekennzeichnet dass**
die Beleuchtungsdauer adaptiv an die Wiederholfrequenz von Tastendrücken und / oder an momentane Aktivitäten ausgebildet ist.
